(19) Europäisches Patentamt
European Patent Office
Office européen des brevets

(11) **EP 4 172 074 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21742729.3**

(22) Anmeldetag: **23.06.2021**

(51) Internationale Patentklassifikation (IPC):
**B65G 1/04** (2006.01)    **B66F 9/14** (2006.01)
**B66F 9/07** (2006.01)    **B65G 21/00** (2006.01)
**B65G 21/08** (2006.01)    **B66F 9/18** (2006.01)

(52) Gemeinsame Patentklassifikation (CPC):
**B65G 1/04; B65G 1/0407; B65G 21/00; B65G 21/08; B66F 9/149; B66F 9/18;** B65G 2201/0232

(86) Internationale Anmeldenummer:
**PCT/EP2021/067127**

(87) Internationale Veröffentlichungsnummer:
**WO 2021/259993 (30.12.2021 Gazette 2021/52)**

(54) **ROLLENSHUTTLE UND HÄNGEROLLEN SHUTTLE**

SHUTTLE FOR ROLLS AND SHUTTLE FOR SUSPENDED ROLLS

NAVETTE À ROULEAUX ET NAVETTE À ROULEAUX SUSPENDUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2020 DE 102020207826**

(43) Veröffentlichungstag der Anmeldung:
**03.05.2023 Patentblatt 2023/18**

(73) Patentinhaber:
• **FB Industry Automation GmbH**
  **8200 Albersdorf-Prebuch (AT)**
• **FRISSENBICHLER GesmbH**
  **8171 St. Kathrein am Offenegg (AT)**

(72) Erfinder: **FRISSENBICHLER, Werner Josef**
**8200 Albersdorf-Prebuch (AT)**

(74) Vertreter: **Hoffmann Eitle**
**Patent- und Rechtsanwälte PartmbB**
**Arabellastraße 30**
**81925 München (DE)**

(56) Entgegenhaltungen:
EP-A1- 2 754 625        WO-A1-2019/213715
CN-A- 104 358 215       CN-A- 105 668 134
CN-A- 106 144 418       CN-U- 204 110 946
JP-A- 2006 160 477      JP-A- 2007 062 973
JP-A- H0 539 107        JP-A- S48 100 870
JP-A- S62 244 803       JP-U- S 595 504
JP-U- S6 093 605        US-A1- 2019 135 539

**Beschreibung**

Die vorliegende Erfindung betrifft die Bereitstellung eines Rollenshuttles und eines Hängerollenshuttles, insbesondere im Zusammenhang mit dem Betrieb eines Regalsystems und eines Transportsystems zur Handhabung von Rollen.

In JP 2006 160477 A ist ein Rollenshuttle zum Transportieren von Rollen in einem Regalsystem beschrieben. Dieses enthält ein Fahrgestell, dass sich entlang von Fahrschienen mittels Räder verfahren lässt, sowie einen Laufschlitten, der an dem Fahrgestell so montiert ist, dass er relativ zu der Fahrtrichtung des Rollenshuttles entlang einer Richtung verfahrbar ist, die quer zur Fahrrichtung des Rollenshuttles verläuft. Mittels einem Lastdorn ist es möglich, eine zu transportierende und lagernde Rolle im Wesentlichen Parallel zur Grundeben schwenkbar zu verfahren. JP 2006 160477 A offenbart ein Rollenshuttle nach dem Oberbegriff des Anspruchs 1.

Weitere Rollenshuttle sind zudem bekannt aus JP H05 39107 A, JP S48 100870 A, sowie JP 2007 062973.

Weiterhin bekannt ist aus JP S62 244803 ein Hängerollenshuttle zum Transportieren von Rollen mit einem Hängegestell und hieran montierten Rädern, um ein Hängerollenshuttle entlang mindestens einer Hängeschiene zu bewegen, die über einer Lagerebene des Regalsystems montiert ist.

Weiterer Stand der Technik für die vorliegende Erfindung ist aus US 6 280 135 B1 bekannt.

In bestehenden Lagersystemen bilden Flurförderfahrzeuge und Regalbediengeräte die Grundlage für das Bestücken und das Auslagern von Artikeln. Jedoch benötigen derartige Flurförderfahrzeuge und Regalbediengeräte regelmäßig viel Platz und sind im Hinblick auf die Flexibilität der Einlagerung beschränkt.

Zudem benötigen bekannte Flurförderfahrzeuge regelmäßig viel Platz zum Manövrieren, sodass deren Einsatz zu einer Reduktion der für die Lagerung zur Verfügung stehenden Kapazitäten führt.

In Hinblick auf die obigen Ausführungen besteht das technische Problem der vorliegenden Erfindung in der Erhöhung der Flexibilität und des Durchsatzes in einem Rollen-Lager- und Transportsystem.

Gemäß der vorliegenden Erfindung wird dieses Problem gelöst durch ein Rollenshuttle zum Transportieren von Rollen in einem Regalsystem mit den Merkmalen des Patentanspruchs 1.

Zudem wird das technische Problem gelöst durch ein Hängerollenshuttle mit den Merkmalen des Patentanspruchs 6 zum Transportieren von Rollen Hängerollenshuttle, zum Transportieren von Rollen entlang eines Hängeschienensystems, sowie zu verschiedenen Auf- und Abgabepunkten mittels Verteilstationen, die mit mehreren Hängeschienen gekoppelt sind, ferner zwischen Regalsystemen oder innerhalb eines Regalsystems.

Weiterhin wird das genannte technische Problem gelöst durch ein Regalsystem zum Speichern und Transportieren von Rollen gemäß dem Patentanspruch 8, in dem zumindest das erfindungsgemäße Rollenshuttle und bevorzugt auch das erfindungsgemäße Hängerollenshuttle für den beschriebenen Zwischentransport zwischen unterschiedlichen Standorten zum Einsatz kommt.

Schließlich wird das technische Problem gelöst durch ein Verfahren zum Betreiben eines Regalsystems mit den Merkmalen des Patentanspruchs 15.

Im Rahmen der vorliegenden Erfindung können Rollen entweder einzel- oder mehrfachtief mittels eines Dornsystems ein- und ausgelagert werden. Hierfür ist das Dornsystem erfindungsgemäß mit einem

Kettenförderer und bevorzugt mit einem Anschlag versehen, um eine geordnete Positionierung der Rollen beim Transport und bei der Lagerung zu gewährleisten.

Mittels geeigneter Dimensionierung der Dornsystemlänge lassen sich Rollen einzel- oder mehrfachtief im Regalsystem manipulieren. In Rahmen der vorliegenden Erfindung kann das Dornsystem entweder als Rollenshuttle oder als Hängerollenshuttle ausgebildet sein. In Fall des Rollenshuttles ist das Dornsystem verschieb- und verschwenkbar an einem Fahrgestell montiert, während bei dem Hängerollenshuttle das Dornsystem an einem Hängeschlitten montiert ist, der sich an einer Fahrschiene hin- und herschieben lässt.

Bevorzugt werden die Rollen auf dem Dornsystem nach außen hin mit ansteigendem oder gleichem Durchmesser positioniert, sodass über eine Hülse am Zentrum der Rollen die Rolle aufgenommen und gehandhabt werden können.

Es ist zudem anzumerken, dass im Fall des Rollenshuttles durch die Doppellagerung des Dornsystems, d.h. verschiebbar entlang einer Querrichtung zu der Fahrtrichtung des Fahrgestells und verschwenkbar relativ zu der Aufhängung des Dorns, eine Handhabung des Dornsystems derart erreicht werden kann, dass auch bei Verschwenken des Dorns von einer Seite zu der gegenüberliegenden Seite des Fahrgestells der Dorn immer so geführt ist, dass er sich nie über die Seiten des Fahrgestells hinaus erstreckt. Dies bedingt eine besonders kompakte Ausbildung des Rollenshuttles und erlaubt eine überlagerte Betriebsweise, bei der einerseits das Rollenshuttle in Längsrichtung bewegbar ist und andererseits auch die Position der Rolle in Hinblick auf die Einlagerung gleichzeitig modifizierbar ist. Bevorzugte Ausführungsformen der vorliegenden Erfindung sind in den abhängigen Patentansprüchen gegeben.

Nachfolgend werden bevorzugte Ausführungsformen der vorliegenden Erfindung mit Bezug auf die Zeichnungen beschrieben.

Es zeigen:

Figur 1    eine Perspektivansicht des erfindungsgemäßen Rollenshuttles;

Figur 2    ein schematisches Diagramm zum Erläutern der Betriebsweise des in Figur 1 gezeigten Rollenshuttles;

Figur 3    Betriebszustände während einer überlagerten longitudinalen Bewegung des Rollenshuttles in Kombination mit einer Umpositionierung des Dornsystems;

Figur 4    eine Erläuterung der Betriebsweise des Rollenshuttles zum Einlagern von Rollen, einfach oder mehrfach tief in eine stationäre Lagerbox oder in eine mobile Lagerbox;

Figur 5    eine Perspektivansicht des erfindungsgemäßen Rollenshuttles bei dem Rollen unterschiedlichen Durchmessers auf dem Dornsystem positioniert sind;

Figur 6    eine schematische Darstellung eines Regalsystems bei der das erfindungsgemäße Rollenshuttle in Kombination mit einem erfindungsgemäßen Hängerollenshuttles zum Einsatz kommt;

Figur 7    eine schematische Darstellung zum Darstellen der Betriebsweise des erfindungsgemäßen Hängerollenshuttles;

Figur 8    eine Perspektivansicht des erfindungsgemäßen Hängerollenshuttles mit auf dem Dornsystem aufgelagerten Rollen unterschiedlichen Durchmessers;

Figur 9    eine Perspektivansicht eines erfindungsgemäßen Lagersystems;

Figur 10   ein Beispiel für den Zugang zu einem Hängerollenshuttle;

Figur 11   Illustration der Funktion des Hängerollenshuttlesystems als Transportsystem zwischen einzelnen Funktionseinheiten innerhalb eines Regalsystems;

Figur 12   weitere bespielhafte Konfiguration von Teilkomponenten des Regalsystems gemäß der vorliegenden Erfindung.

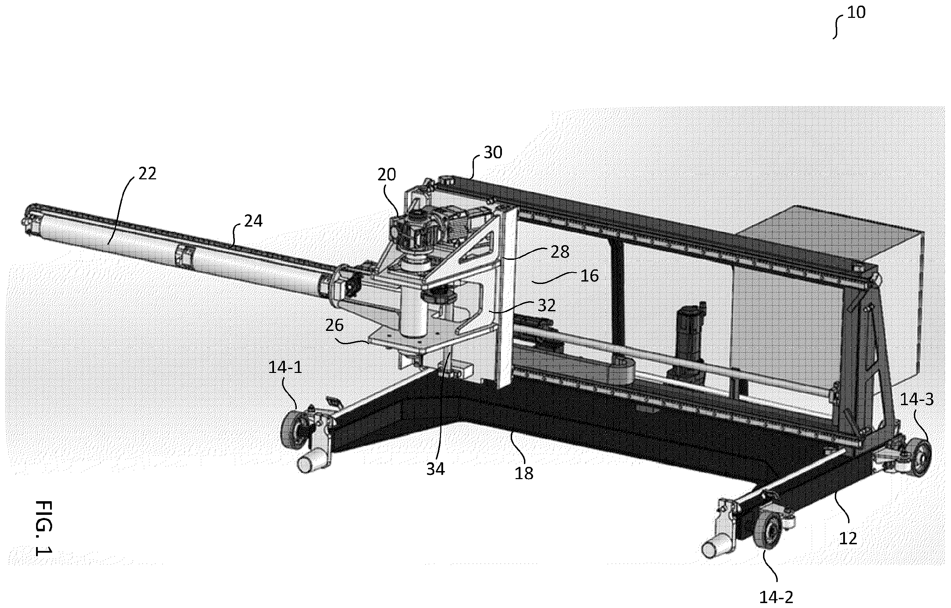

Figur 1 zeigt eine Perspektivansicht des erfindungsgemäßen Rollenshuttles.

Wie in Figur 1 gezeigt, enthält das erfindungsgemäße Rollenshuttle 10 zum Transportieren von Rollen in einem Regalsystem ein Fahrgestell 12 mit hieran montierten Rädern 14-1, ..., 14-3, um das Rollenshuttle entlang von Fahrschienen zu bewegen, die in einer Lagerebene des Regalsystems verlegt sind.

Wie in Figur 1 gezeigt, weist das erfindungsgemäße Rollenshuttle 10 einen Laufschlitten 16 auf, der an dem Fahrgestell 12 so montiert ist, dass er relativ zu der Fahrtrichtung des Rollenshuttles verfahrbar ist. Das Rollenshuttle 10 kann sich jeweils in einer Ebene oder in mehreren Ebenen bewegen, wobei im letztgenannten Fall das Rollenshuttle mittels eines Shuttleumsetzers zwischen unterschiedlichen Ebenen versetzt werden kann, sodass auch mit wenigen Rollenshuttles 10 ein Regalsystem bedient werden kann.

Das Rollenshuttle 10 kann zudem auch außerhalb eines Regalsystem fahren bzw. betrieben werden. Dazu wird es über einen Vertikalumsetzer auf eine Fahrschiene außerhalb des Regalsystems gesetzt oder es fährt über eine Schienenverlängerung aus dem Regalsystem heraus, um eine Übergabestation zu bedienen. An dieser Übergabestation werden die Rollen an das Regalsystem übergeben oder aus dem Regalsystem übernommen.

Im Allgemeinen ist der Laufschlitten 16 so verfahrbar, dass die Richtung vom Verfahren gegenüber der Fahrtrichtung des Rollenshuttles 10 um einen vorbestimmten Winkel größer als Null abweicht, beispielsweise um einen Winkel von 90 Grad. Demnach ist der Laufschlitten 16 bevorzugt quer zur Fahrtrichtung des Fahrgestells 12 verfahrbar.

Wie in Figur 1 gezeigt, kann der Laufschlitten 16 eine Grundplatte 18 aufweisen, auf der dann einzelne Elemente monotierbar sind. Die Grundplatte 18 wird z.B. mittels Kettenförderer an einem vertikalen Gestell des Laufschlittens verfahren. Für den Antrieb des Laufschlittens kann hierfür ein Elektromotor 20 vorgesehen sein.

Wie in Figur 1 gezeigt, weist das erfindungsgemäße Rollenshuttle 10 zudem einen Lastdorn 22 zum Transportieren mindestens einer einzulagernden Rolle auf. Im Rahmen der vorliegenden Erfindung ist der Lastdorn 22 an dem Laufschlitten 16 verschwenkbar befestigt, und zwar in einer Ebene, die zur Grundebene des Fahrgestells bzw. zur Lagerebene des Regalsystems im Wesentlichen parallel verläuft.

Wie in Figur 1 gezeigt, enthält der Lastdorn 22 zudem einen Kettenförderer 24 mittels dem eine oder mehrere Rollen auf den Lastdorn 22 aufgenommen werden bzw. wieder abgelegt werden können.

Wie in Figur 1 gezeigt, erfolgt das Verschwenken des Lastdorns 22 mittels geeigneter Lagerung, beispielsweise mittels zweier Lagerplatten 26 und 28, die an der Grundplatte des Laufschlittens 16 formfest mittels Verstrebungen 30 und 32 arretiert sind.

Bevorzugt kann der erfindungsgemäße Lastdorn 22 an dem Laufschlitten 16 höhenverstellbar montiert sein, und beispielsweise lässt sich die Höhe mittels einer geeignet angetriebenen Spindel 34 relativ zu der Grundfläche des Fahrgestells 12 verändern. Eine derartige höhenverstellbare Ausbildung des Lastdorns 22 vereinfacht die Handhabung von Rollen beim Aufnehmen und Ablegen von dem Lastdorn 22.

Die Länge des Lastdorns 22 ist bevorzugt so dimensioniert, dass sie ein ganzzahliges Vielfaches der Breite der zu transportierenden Rollen ist. Bevorzugt lässt sich zudem ein Anschlag vorsehen, um die Rollen während eines Transports im Regalsystem zu sichern.

Weiterhin kann bevorzugt an der Unterseite des Fahrgestells 12 mindestens eine Stützrolle und/oder Gegenanlagefläche vorgesehen sein, mittels der bei relativ zum Rollenshuttle 10 seitlich ausgeschwenkten Lastdorn 22 Kippkräfte in die Fahrschienen des Regalsystems einhaltbar sind.

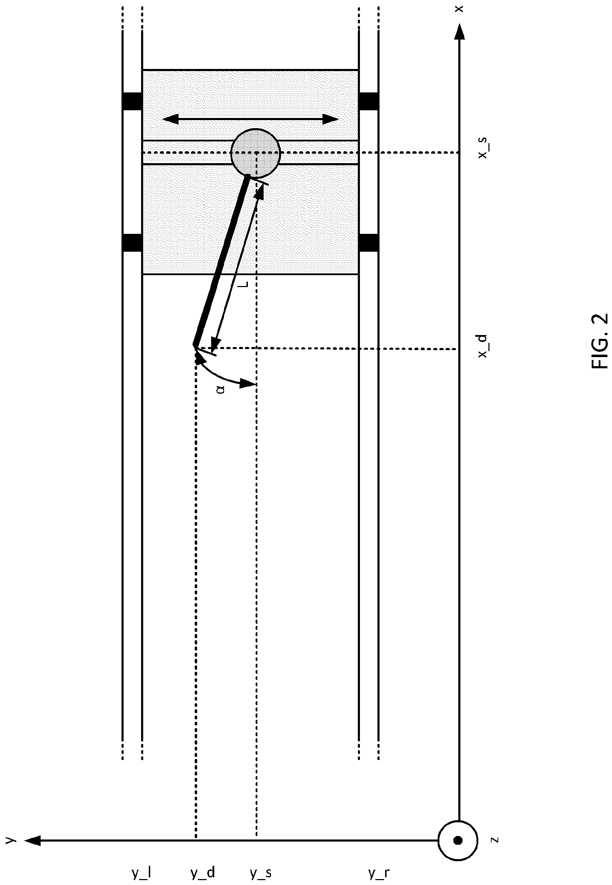

Figur 2 zeigt ein schematisches Diagramm zum Erläutern der Betriebsweise des in Figur 1 gezeigten Rollenshuttles

Wie in Figur 2 gezeigt, lässt sich der Betrieb des Rollenshuttles 10 im Regalsystem bevorzugt mit einem Koordinatensystem beschreiben, bei dem die Fahrtrichtung die X-Achse, die Einlagerungsrichtung die Y-Achse, und die Verfahrrichtung in Höhenrichtung die Z-Achse bildet.

Wie in Figur 2 gezeigt, besteht für den Betrieb des Rollenshuttles 10 ein Freiheitsgrad in Hinblick auf die Positionierung des Fahrgestells gemäß der Koordinate x_s. Die Y-Position des Laufschlittens relativ zum Fahrgestell sei mittels y_s beschrieben, und die Höhenverstellung des Lastdorns relativ zum Fahrgestell sei durch z_s beschrieben. Einen weiteren Freiheitsgrad in Hinblick auf den Betrieb des Rollenshuttles ist der Schwenkwinkel des Lastdorns $\alpha$.

Unter der Annahme, dass der Lastdorn eine Länge L aufweist, lässt sich nun die Position der Spitze des Lastdorns durch folgende Beziehungen ausdrücken:

$$x\_d = x\_s - L * \cos \alpha$$

$$y\_d = y\_s + L * \sin \alpha$$

Im Rahmen der vorliegenden Erfindung soll eine überlagerte Bewegung des Rollenshuttles 10 entlang der X-Richtung und gleichzeitiges Verschwenken wie Verfahren des Lastdorns 22 mittels des Laufschlittens ermöglicht werden. Hierbei lautet die Betriebsbedingung:

$$y\_l < y\_d < y\_r$$

Setzt man in diese Betriebsbedingung die obigen Beziehungen für x_d und y_d auf und löst sie nach $\alpha$ auf, so zeigt sich, dass der zulässige Schwenkwinkel $\alpha$ abhängt von der Positionierung y_s des Lastdorns 22 und der Länge L des Lastdorns 22 gemäß:

$$\arcsin[(y\_l-y\_s)/L] > \alpha(y\_s) > \arcsin[(y\_r-y\_s)/L]$$

Sofern diese Bedingung eingehalten ist, ist es möglich das Rollenshuttle 10 parallel entlang der Laufrichtung der Laufschienen zu bewegen und gleichzeitig den Lastdorn 22 von der einen Seite auf die andere Seite zu positionieren.

Generell, kann somit bei Vorliegen eines Auftrags zum Ein- oder Auslagern mindestens einer Rolle so vorgegangen werden, dass zunächst eine erste Position und eine zweite Position entlang der Fahrschiene definiert wird, um die Bewegung des Rollenshuttles 10 entlang der x-Richtung im Rahmen der Abarbeitung des Auftrags festzulegen.

Anschließend ist während der Longitudinalbewegung des Rollenshuttles 10 die Position y_s und der Schwenkwinkel $\alpha$ für den Laufschlitten und das Verschwenken des Lastdorns 22 jeweils so zu regeln, dass die obige Bedingung eingehalten ist. Durch überlagerte Longitudinal- und Schwenkbewegung ist es möglich die Betriebszeiten für das Ein- und Auslagern von Rollen besonders effizient auszubilden.

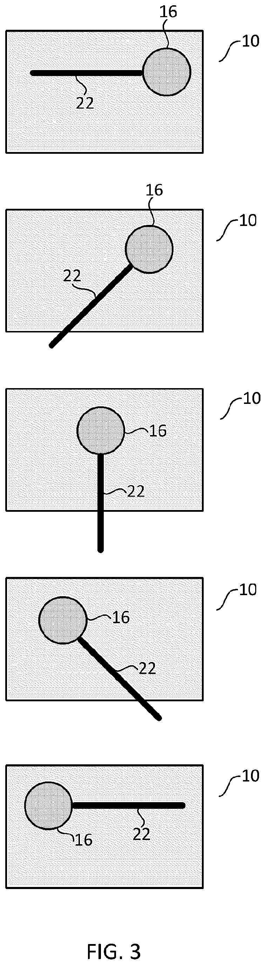

Figur 3 zeigt Betriebszustände während einer überlagerten longitudinalen Bewegung des Rollenshuttles 10 in Kombination mit einer Umpositionierung des Dornsystems 22.

Anhand der Figur 3 ist zu erkennen, dass bei Einhaltung der oben beschriebenen Betriebsbedingung während der Längsbewegung des Rollenshuttles 10 entlang der Laufschienen sich der Laufschlitten 16 sukzessive von einer Seite des Rollenshuttles 10 zu der anderen bewegt während gleichzeitig ein Verschwenken des Lastdorns 22 erfolgt.

Wie erwähnt wird hierdurch eine Überlagerung der Bewegungen erreicht und somit ein besonders effizientes Handhaben von Rollen während eines Ein- oder Auslagerungsprozesses im Regalsystem. Zu jeden Zeitpunkt ist gewährleistet, dass während der Längsbewegung des Rollenshuttles 10 der Lastdorn 22 nie über die Seite des Rollenshuttles 10 vorragt und somit in Kontakt zu weiteren Komponenten des Regalsystems gelangt.

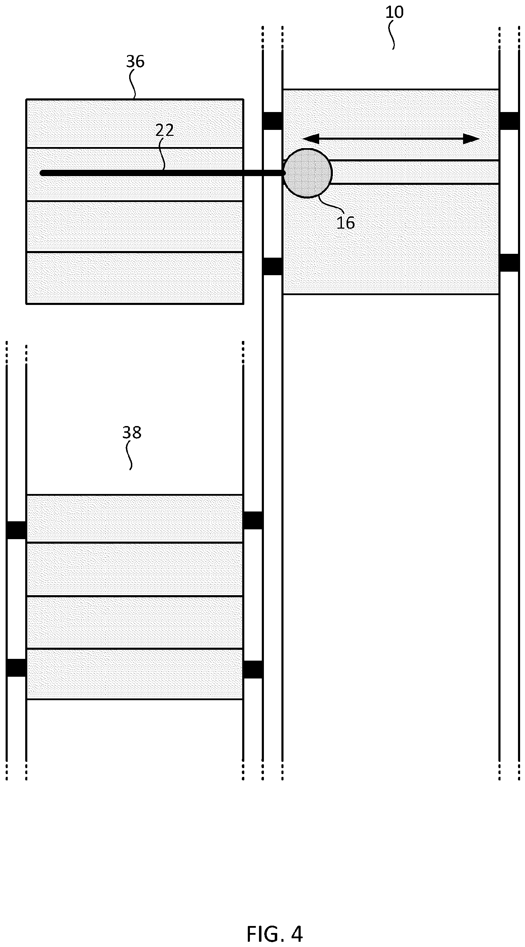

Figur 4 zeigt eine Erläuterung der Betriebsweise des Rollenshuttles 10 zum Einlagern von Rollen, einfach- oder mehrfachtief in eine stationäre Lagerbox 36 oder in eine mobile Lagerbox 38.

Wie in Figur 4 gezeigt, betrifft ein weiterer Betriebszustand des erfindungsgemäßen Rollenshuttles 10 den Betrieb zum tatsächlichen Ein- und Auslagern von Rollen in das Regalsystem.

Wie in Figur 4 gezeigt, kann hierbei das Regalsystem eine stationäre Lagerbox 36 aufweisen, die fest an dem Regalsystem montiert ist. Alternativ kann eine Lagerbox auch als mobile Lagerbox 38 ausgebildet sein, die mittels Laufräder parallel zu und entlang der Fahrschienen des Rollenshuttles 10 relativ zu dem Rollenshuttle 10 positionierbar ist.

Wie in Figur 4 gezeigt, erfolgt das Ein bzw. Auslagern von Rollen entweder in der stationären Lagerbox 36 oder in der mobilen Lagerbox 38 mittels dem Laufschlitten 16 und dem Lastdorn 22. Hierbei wird der Laufschlitten 16 an den seitlichen Rand des Rollenshuttles 10 verfahren und gleichzeitig der Lastdorn 22 so verschwenkt, dass er über der Lagerbox 36 bzw. 38 positioniert ist. Dann kann durch Höhenverstellen des Laufschlittens 16 und des Lastdorns 22 erreicht werden, dass entweder Rollen mittels dem Kettenförderer 24 des Lastdorns 22 auf den Lastdorn 22 aufgenommen werden oder in umgekehrter Weise von dem Lastdorn 22 an die stationäre Lagerbox 36 oder an die mobile Lagerbox 38 abgegeben werden.

Wie in Figur 4 gezeigt, erhöht das Bereitstellen von mobilen Lagerboxen 38 die Flexibilität des Lagersystems, da es das Ein- und Auslagern von Rollen selbst dann ermöglicht, wenn das Rollenshuttle 10 sich nicht bewegt, sofern die mobile Lagerbox 38 korrekt relativ zu dem Rollenshuttle 10 verfahren wird.

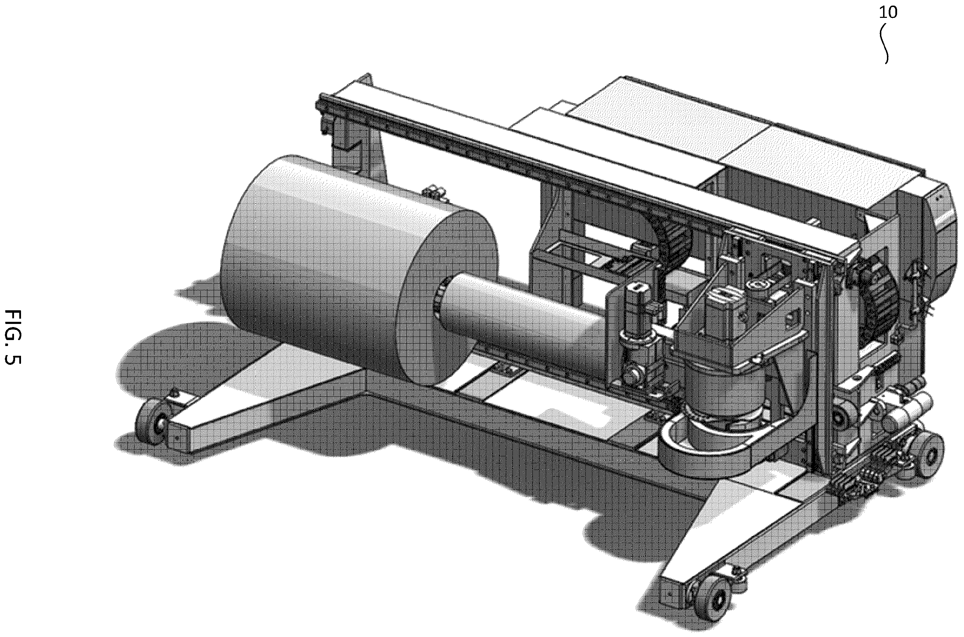

Figur 5 zeigt eine Perspektivansicht des erfindungsgemäßen Rollenshuttles 10 bei dem Rollen unterschiedlichen Durchmessers auf dem Lastdorn 22 positioniert sind

Wie in Figur 5 gezeigt, nimmt der Lastdorn 22 des Rollenshuttles 10 bevorzugt Rollen von Innen nach Außen mit zunehmender Wicklungszahl bzw. mit zunehmendem Durchmesser auf.

Wie ebenfalls in der Figur 5 gezeigt, kann das Rollenshuttle 10 geeignet mit Schaltkästen versehen sein, in welchen Schaltungselektronik für den Betrieb und die Steuerung des Antriebs und der Servo-Motoren für den Betrieb des Lastdorns 22 vorgesehen sind.

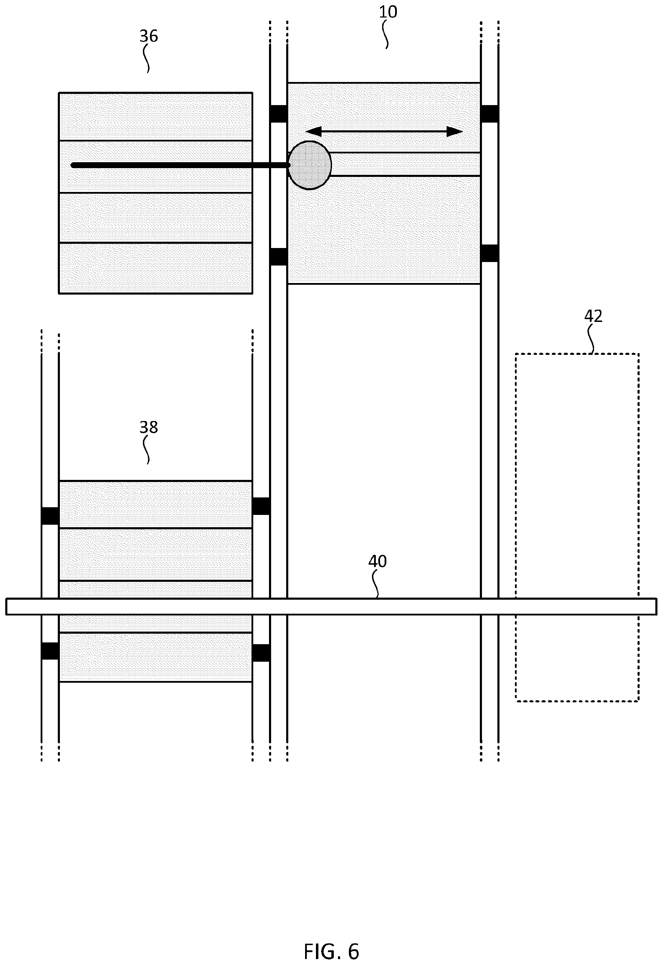

Figur 6 zeigt eine schematische Darstellung eines Regalsystems bei der das erfindungsgemäße Rollenshuttle 10 in Kombination mit einem erfindungsgemäßen Hängerollenshuttle zum Einsatz kommt.

Die Figur 6 zeigt ähnlich wie die Figur 4 das erfindungsgemäße Rollenshuttle 10, die stationäre Lagerbox 36 und die mobile Lagerbox 38. In Hinblick auf die Erläuterung dieser Einheiten wird auf die obigen Ausführungen zu der Figur 4 verwiesen.

Wie zudem in Figur 6 gezeigt, kann im Rahmen der vorliegenden Erfindung ein Hängerollenshuttle zum Einsatz kommen. Hierzu ist gemäß der vorliegenden Erfindung quer zur Fahrtrichtung des Rollenshuttles 10 eine Trägerschiene 40 vorgesehen, die nicht nur den Fahrbereich des Rollenshuttles überstreicht, sondern auch den Lagerbereich der Lagerboxen, bevorzugt der mobilen Lagerboxen 38, sowie eine Ladezone, die zum Anliefern bzw. Auslagern von Rollen vorgesehen ist.

Wie in Figur 6 gezeigt, erfolgt der Materialfluss von der Ladezone beispielsweise quer zur Fahrtrichtung entlang der Laufschiene 40 zu, beispielsweise der mobilen Lagerbox 38. Sobald Rollen geeignet in der mobilen Lagerbox 38 eingelagert sind, ist es möglich diese parallel zur Fahrschiene des Rollenshuttles 10 zu verfahren. Anschließend kann das Rollenshuttle 10 relativ zu der mobilen Lagerbox 38 positioniert sein, um dann zu lagernde oder auszulagernde Rollen von der mobilen Lagerbox 38 aufzunehmen und geeignet zu der stationären Lagerbox 36 zu verfahren. Beim Auslagern erfolgt der Materialfluss umgekehrt von der stationären Lagerbox 36 über das Rollenshuttle 10 zu der mobilen Lagerbox 38, mittels der dann ein Auslagern entlang der Hängeschiene 40 zu der Ladezone möglich ist.

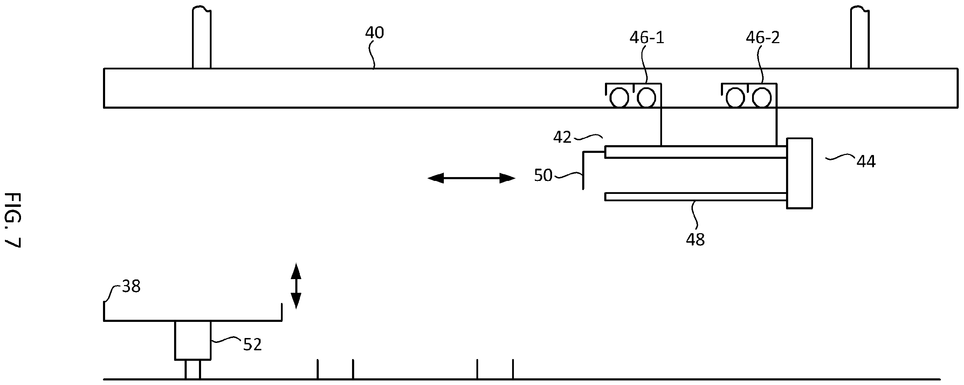

Figur 7 zeigt eine schematische Darstellung zum Darstellen der Betriebsweise des erfindungsgemäßen Hängerollenshuttles.

Wie in Figur 7 gezeigt, wird gemäß der vorliegenden Erfindung ein Hängerollenshuttle 42 zum Transportieren von Rollen an einer Übergabestation für den Weitertransport in einem Regalsystem bereitgestellt. Das Hängerollenshuttle 42 enthält ein Hängegestell 44 mit hieran montierten Rädern 46-1, 46-2, um das Hängerollenshuttle entlang der Hängeschiene 40 zu bewegen, die an der Oberseite einer Lagerebenen des Regalsystems montiert ist.

An dem Hängegestell 44 ist dann der Lastdorn 48 befestigt, mittels dem sich zu lagernde Rollen entlang der Fahrtrichtung der Hängeschiene 40 verfahren lassen. Bevorzugt ist der Lastdorn 48 des Hängegestells 44 mit einem Kettenförderer ausgestatten, um zu lagernde Rollen entlang des Lastdorns zu positionieren, d.h. entweder aufzunehmen oder abzugeben. Der Lastdorn 48 weist bevorzugt eine Länge auf, die ein ganzzahliges Vielfaches der Breite der zu transportierenden Rollen darstellt.

Wie in Figur 7 gezeigt, kann an dem Hängegestell 44 ein schwenkbarer Anschlag 50 vorgesehen sein, der zur Sicherung von Rollen während des Transports der Hängeschiene 40 dient.

Wie in Figur 7 gezeigt, wird sobald das Hängerollenshuttle 42 über beispielsweise der mobilen Lagerbox 38 positioniert ist, ein Austausch von Rollen zwischen dem Hängerollenshuttle 42 und der mobilen Lagerbox 38 bewirkt. Hierzu kann bevorzugt die mobile Lagerbox 38 mit einer Hubvorrichtung 52 versehen sein, um nach Anheben der Lagerfläche der mobilen Lagerbox 38 Rollen von dem Hängerollenshuttle 42 an die mobile Lagerbox 38 abzugeben oder von der mobilen Lagerbox 38 auf den Hängedorn 48 des Hängerollenshuttles 42 zu überführen.

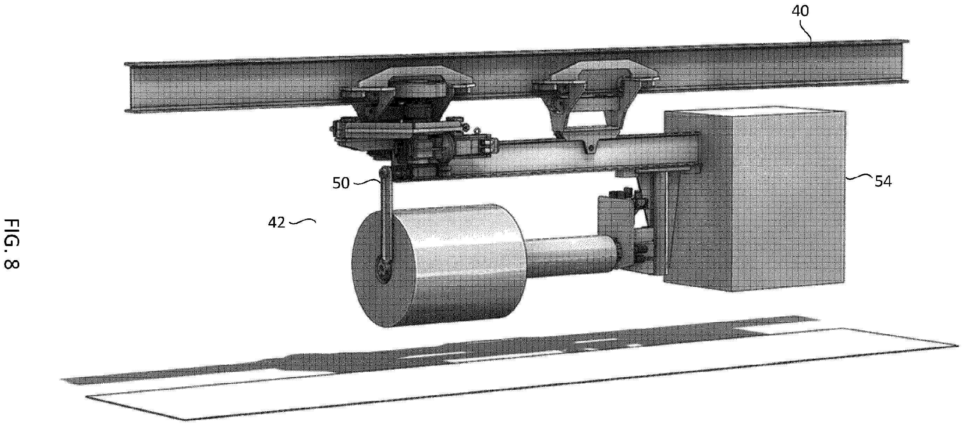

Figur 8 zeigt eine Perspektivansicht des erfindungsgemäßen Hängerollenshuttles 42 mit auf dem Dornsystem aufgelagerten Rollen unterschiedlichen Durchmessers.

Wie in Figur 8 gezeigt, wird wie im Fall des Rollenshuttles 10 auch beim Hängerollenshuttles 42 eine Bestückung des Lastdorns bevorzugt so gewählt, dass der Durchmesser der Rollen von Innen nach Außen zunimmt. Der Anschlag 50 sichert während des Transports die Rollen gegenüber einem Abgleiten von dem Lastdorn.

Wie in Figur 8 gezeigt, kann das Hängerollenshuttle 42 auch eine Einheit 54 aufweisen, in der geeignete Schaltmittel und Elektronik für den Betrieb des Hängerollenshuttles 42 vorgesehen sind.

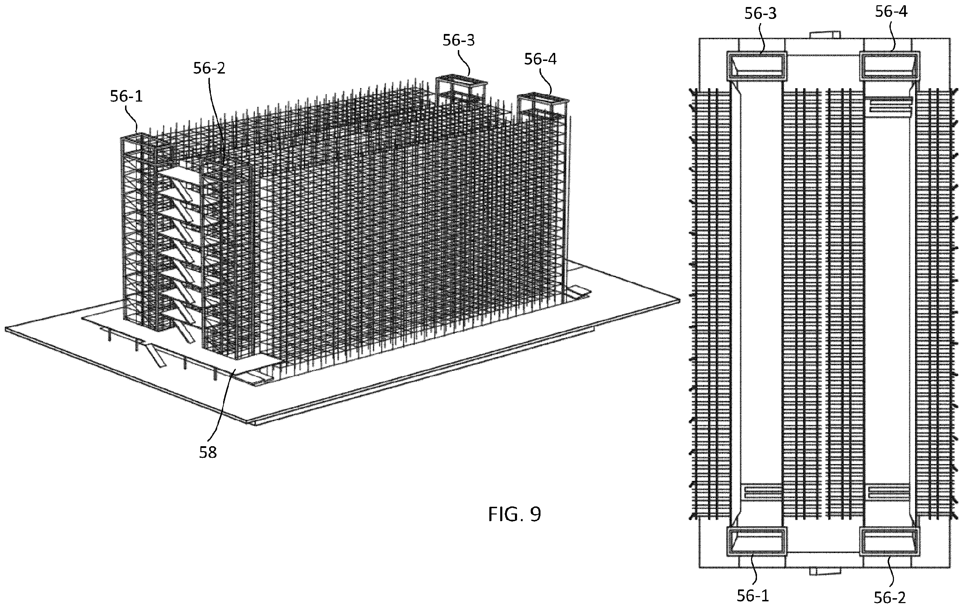

Figur 9 zeigt eine Perspektivansicht des erfindungsgemäßen Lagersystems.

Wie in Figur 9 gezeigt, weist das erfindungsgemäße Regalsystem zum Speichern und Transportieren von Rollen eine Vielzahl von Lagerebenen auf. In jeder Lagerebene verlaufen mehrere Fahrschienen, die für den Transport von Rollen vorgesehen sind. Eine Vielzahl von Lagerboxen grenzt an die jeweiligen Fahrschienen in jeder Lagerebene an. Erfindungsgemäß kann nun ein Rollenshuttle 10 gemäß der vorliegenden Erfindung entlang der Fahrschienen zum Transport von Rollen verfahren werden.

Bevorzugt erfolgt im Rahmen der vorliegenden Erfindung eine kombinierte Anwendung mindestens eines Rollenshuttles 10 mit mindestens einem Hängerollenshuttle 42, wie anhand von Figur 6 erläutert. Hierbei dient das Rollenshuttle dem Transport innerhalb des Regalsystems und das Hängerollenshuttle dem Weitertransport zwischen Regalsystem oder einzelnen Funktionsbereiche innerhalb eines Regalsystems. Mittels einem Hängerollenshuttle ist es zudem möglich, Rollen und sonstige Lagerware an weit verteilte Abgabe- und Aufnahmestationen zu verteilen bzw. von diesen Abgabe- und Aufnahmestationen ausgehend einzulagern.

Wie in Figur 9 gezeigt, kann bzw. können bevorzugt an den Stirnseiten des Regalsystems ein oder mehrere Liftsysteme 56 vorgesehen sein. Diese ermöglichen auch ein vertikales Verfahren des erfindungsgemäßen Rollenshuttles 10 über mehrere Lagerebenen des Regalsystems hinweg. Bevorzugt bedient jeder Lifte 56 eine Ladezone 58 des Regalsystems, und die Zahl, der in jeder Lagerebene eingesetzten Rollenshuttle 10 bzw. Hängerollenshuttle 42 ist abhängig vom Anwendungsfall frei konfigurierbar.

Wie in Figur 9 gezeigt, weist das erfindungsgemäße Regalsystem zudem eine Begehungsplattform 58 auf, um für Wartungs- bzw. Servicetätigkeiten einen Zugang zu dem Hängerollenshuttle zu ermöglichen. Wie zudem in Figur 9 gezeigt, ist es möglich die Fahrschiene für das Hängerollenshuttle in einer Einhausung 60 zu führen. Diese ermöglicht beispielsweise einen verbesserten Witterungsschutz oder einen Schutz von zu transportierender Ware gegenüber Einwirkungen von der Außenseite.

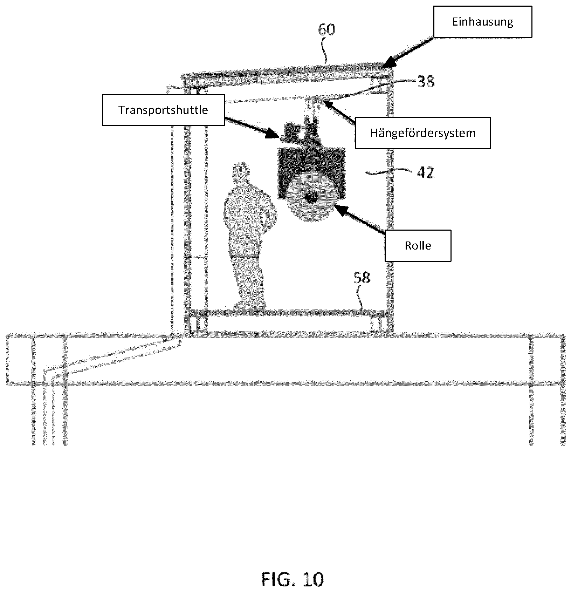

Die Figur 10 zeigt ein Beispiel für den Zugang zu einem Hängerollenshuttle. Hier ist gezeigt, dass zudem auch die Begehungsplattform in einer Einhausung 60 aufgenommen sein kann, was für einen verbesserten Schutz des Servicepersonals ermöglicht. Bevorzugt ist die Begehungsplattform höhenmäßig so angeordnet, dass ein bequemer Zugang des Servicepersonals zu dem Hängerollenshuttle möglich ist. Dies ist eine bevorzugte Ausführungsform, um eine Bedienung von Regalkomponenten, aber auch eine Handhabung von Rollen innerhalb des Regalsystems, zu ermöglichen.

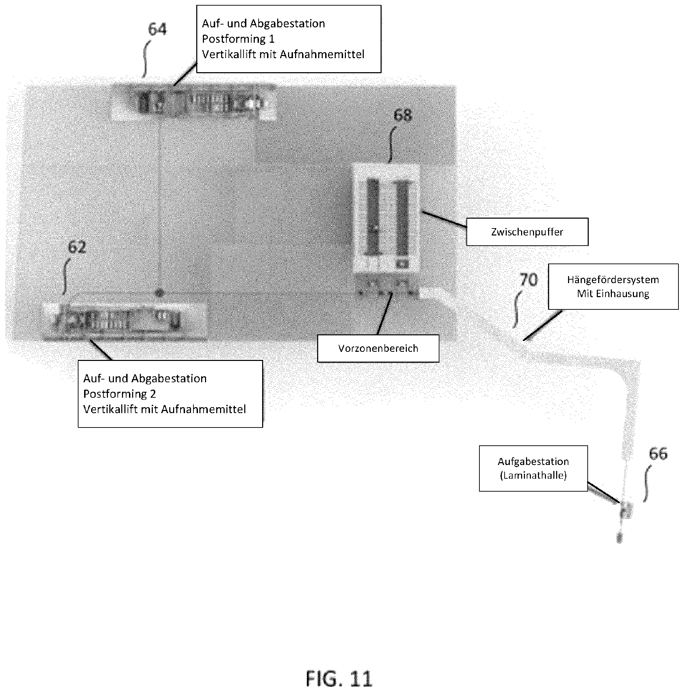

Die Figur 11 illustriert die Funktion des Hängerollenshuttlesystems als Transportsystem zwischen einzelnen Funktionseinheiten innerhalb eines Regalsystems. Wie in Figur 11 gezeigt, können beispielsweise Funktionseinheiten gebildet sein durch Auf- und Abgabestationen 62, 64, 66, dem eigentlichen Regalsystem wie in Figur 9 gezeigt, sowie einen Zwischenspeicher 68. Gemäß Figur 11 kann der Zwischenspeicher mit einem Vorzonenbereich ausgestattet sein, und somit als Puffer für die Ein- und Auslagerung von Waren und Rollen in das Regalsystem dienen. Der Vorzonenbereich kann zudem durch ein Hängefördersystem 70 mit Waren bestückt werden beziehungsweise Waren aus dem Vorzonenbereich zu der entsprechenden Aufgabestation 66 transportieren. Allgemein sind Hängefördersysteme gemäß der vorliegenden Erfindung zudem geeignet, um ganze Regalsysteme miteinander zu verbinden.

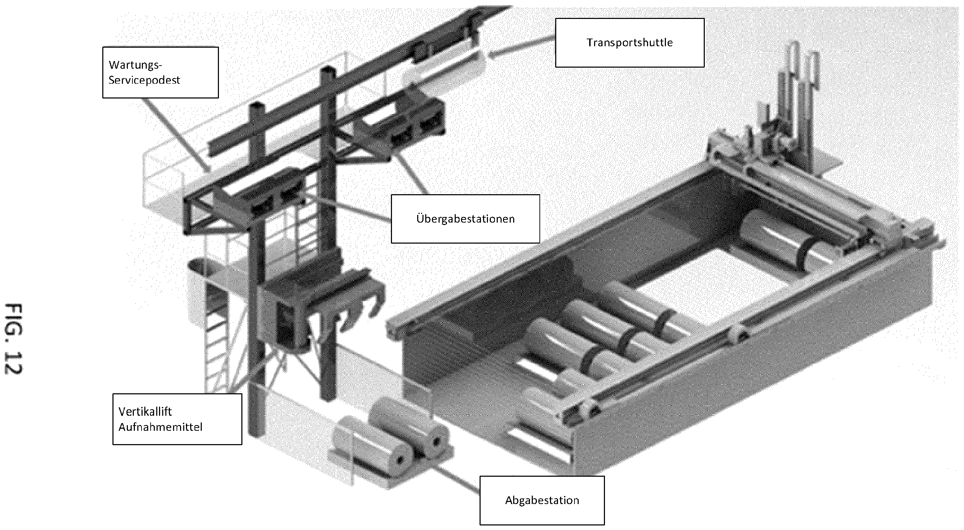

Die Figur 12 zeigt eine weitere beispielhafte Konfiguration von Teilkomponenten des Regalsystems gemäß der vorliegenden Erfindung. Wie in Figur 12 gezeigt, kann eine Bestückung des Hängerollenshuttles 42 auch über unterschiedliche Höhen hinweg erfolgen. Hierzu dient ein Vertikallift mit Aufnahmemittel 72, der eine Abgabestation 74 geeignet anfährt. Nach Aufnahme der Rollenware verfährt der Vertikallift 72 zu einer oder mehreren Übergabestationen 76, 78, an denen das Transportshuttle 42 vorbeifahren kann. Aus den Übergabestationen 76, 78 übernimmt dann das Transportshuttle 42 die Rollenware, um diese in dem Regalsystem zu verfahren. Auch hier ist es vorteilhaft eine Wartungs- bzw. Serviceplattform 58 vorzusehen, sodass das Servicepersonal es mittels einer Leiter 80 erreichen kann.

Insgesamt ermöglicht die vorliegende Erfindung den Einsatz eines sehr effizienten Rollenshuttles bzw. Hängerollenshuttles in Kombination mit einem Regalsystem zum Erzielen einfach- und mehrfachtiefer Lagerungen von Rollen. Die Handhabung von Rollen wird insbesondere durch die Anwendung von Lastdornsystemen gewährleistet. In Hinblick auf den Transport von Rollen in dem Regalsystem können Rollen zudem optimal an einem Hängerollenshuttle verfahren werden.

**Patentansprüche**

1.  Rollenshuttle zum Transportieren von Rollen in einem Regalsystem, enthaltend:

    ein Fahrgestell (12) mit hieran montierten Rädern, um das Rollenshuttle entlang von Fahrschienen zu bewegen, die in einer Lagerebene des Regalsystems verlegt sind;
    einen Laufschlitten (16), der an dem Fahrgestell (12) so montiert ist, dass er relativ zu der Fahrtrichtung des Rollenshuttle entlang einer Richtung verfahrbar ist, die von der Fahrtrichtung des Rollenshuttle um einen vorbestimmten Winkel größer als Null abweicht;
    einen Lastdorn (22) zum Transportieren mindestens einer zu lagernden Rolle, der an dem Laufschlitten (16) in einer zur Lagerebene des Regalsystems im Wesentlichen parallelen Ebene schwenkbar befestigt ist; **dadurch gekennzeichnet, dass**
    der Lastdorn (22) mit einem Kettenförderer (24) ausgestattet ist, um zu lagernde Rollen entlang des Lastdorns (22) zu positionieren.

2.  Rollenshuttle nach Anspruch 1, wobei der Laufschlitten (16) quer zur Fahrrichtung des Rollenshuttle verfahrbar ist.

3.  Rollenshuttle nach Anspruch 1 oder 2, wobei am Lastdorn (22) ein Anschlag vorgesehen ist, um Rollen während eines Transports im Regelsystem zu sichern.

4.  Rollenshuttle nach einem der Ansprüche 1 bis 3, enthaltend ein Hubsystem, um den Lastdorn (22) relativ zu dem Fahrgestell (12) anzuheben bzw. abzusenken.

5.  Rollenshuttle nach einem der Ansprüche 1 bis 4, wobei an der Unterseite des Fahrgestells mindestens eine Stützrolle und/oder Gegenanlagefläche vorgesehen ist, mittels der bei relativ zum Rollenshuttle seitlich ausgeschwenktem Lastdorn (22) Kippkräfte in die Fahrschienen des Regalsystems einleitbar sind.

6.  Hängerollenshuttle zum Transportieren von Rollen entlang eines Hängeschienensystems, sowie zu verschiedenen Auf- und Abgabepunkten mittels Verteilstationen, die mit mehreren Hängeschienen gekoppelt sind, ferner zwischen Regalsystemen oder innerhalb eines Regalsystems, enthaltend:

    ein Hängegestell (44) mit hieran montierten Rädern, um das Hängerollenshuttle entlang mindestens einer Hängeschiene (40) zu bewegen, die über einer Lagerebene des Regalsystems moniert ist;
    einen an dem Hängegestell (44) befestigten Lastdorn (48) zum Transportieren mindestens einer zu lagernden Rolle entlang der Richtung der Hängeschiene (40); **dadurch gekennzeichnet, dass**
    der Lastdorn (48) mit einem Kettenförderer ausgestattet ist, um zu lagernde Rollen entlang des Lastdorns (48) zu positionieren.

7.  Hängerollenshuttle nach Anspruch 6,

    wobei am Hängegestell (44) ein schwenkbarer Anschlag (50) vorgesehen ist, um Rollen während eines Transports im Regelsystem zu sichern, und/oder
    enthaltend ein Hubsystem, um den Lastdorn (48) relativ zu der Hängeschiene (40) anzuheben bzw. abzusenken.

8.  Regalsystem zum Speichern und Transportieren von Rollen, enthaltend:

    mindestens eine Lagerebene mit mindestens einem Paar von Fahrschienen, die für den Transport von Rollen vorgesehen sind;
    eine Vielzahl von Lagerboxen (36, 38), die angrenzend an das mindestens ein Paar von Fahrschienen in der Lagerebene platziert sind;
    mindestens ein Rollenshuttle (10) nach einem der Ansprüche 1 bis 5, das entlang dem mindestens einem Paar von Fahrschienen für den Transport von Rollen verfahrbar ist.

9.  Regalsystem nach Anspruch 8, enthaltend mindestens eine Hängeschiene (40), die quer zu der Fahrtrichtung des mindestens einem Paar von Fahrschienen über der Lagerebene angeordnet ist, um einen Fahrweg für ein Hängerollenshuttle (42) nach einem der Ansprüche 6 und 7 über der Lagerebene zu bilden.

10. Regalsystem nach Anspruch 8 oder 9, wobei die Hängeschiene in einer Einhausung geführt ist.

11. Regalsystem nach einem der Ansprüche 8 bis 10, enthaltend eine Begehungsplattform (58), um für Wartungs- bzw. Servicetätigkeiten einen Zugang zu dem mindestens einem Rollenshuttle (10) und/oder dem mindestens einem Hängerollenshuttle (42) zu ermöglichen.

12. Regalsystem nach einem der Ansprüche 8 bis 11, wobei mindestens eine Lagerbox (38), die an das mindestens eine Paar von Fahrschienen angrenzt, in Fahrtrichtung des mindestens einen Paars von Fahrschienen verfahrbar ist.

13. Regalsystem nach Anspruch 12, wobei die mindestens eine verfahrbare Lagerbox (38) eine Hubvorrichtung (52) aufweist, um eine Lagerfläche der Lagerbox (38) anzuheben bzw. abzusenken.

14. Regalsystem nach einem der Ansprüche 8 bis 13, das mindestens zwei Lagerebenen aufweist, wobei an mindestens einer Außenseitenfläche des Regalsystems mindestens ein Liftsystem (56) vorgesehen ist, um Rollenshuttles zwischen unterschiedlichen Lagerebenen umzusetzen.

15. Verfahren zum Betreiben eines Regalsystems nach einem der Ansprüche 8 bis 14, enthaltend die Schritte:

Bestimmen einer ersten Position $x_s1$ und einer zweiten Position $x\_s\_2$ entlang dem mindestens einem Paar von Fahrschienen, um eine Bewegung eines Rollenshuttles (10) nach einem der Ansprüche 1 bis 5 in einer ersten Richtung entlang dem mindestens einem Paar von Fahrschienen gemäß einem Auftrag zum Einlagern oder Auslagern von mindestens einer Rolle festzulegen;
Steuern der Position $y\_s$ des Laufschlittens quer zur Fahrtrichtung des Rollenshuttles und des Schwenkwinkels $\alpha$ des Lastdorns während der Bewegung des Rollenshuttles zwischen der ersten Position $x_s$-1 und der zweiten Position $x\_s\_2$ so, dass die Bedingung

$$\texttt{arcsin[(y\_l-y\_s)/L]} \; > \; \alpha\texttt{(y\_s)} \; > \; \texttt{arcsin[(y\_r-y\_s)/L]}$$

erfüllt ist, wenn
L die Länge des Lastdorns (22) ist, und
die Werte yl-ys und yr-ys anhand der Position $y\_s$ des Laufschlittens relativ zu den Positionen $y\_l$ und $y\_r$ der Laufschienen festgelegt sind.

**Claims**

1. A roll shuttle for transporting rolls in a rack system, comprising:

a chassis (12) having wheels mounted thereon in order to move the roll shuttle along travel rails, which are laid in a storage plane of the rack system;
a running slide (16), which is mounted on the chassis (12) so as to be movable relative to the direction of travel of the roll shuttle along a direction, which deviates from the direction of travel of the roll shuttle by a predetermined angle greater than zero;
a load mandrel (22) for transporting at least one roll to be stored, which is pivotably fastened to the running slide (16) in a plane substantially in parallel to the storage plane of the rack system; **characterised in that**
the load mandrel (22) is equipped with a chain conveyor (24) in order to position rolls to be stored along the load mandrel (22).

2. The roll shuttle according to claim 1, wherein the running slide (16) is movable transversely to the direction of travel of the roll shuttle.

3. The roll shuttle according to claim 1 or 2, wherein a stop is provided on the load mandrel (22) in order to secure rolls during transport in the rack system.

**4.** The roll shuttle according to any of claims 1 to 3, comprising a lifting system in order to raise or lower the load mandrel (22) relative to the chassis (12).

**5.** The roll shuttle according to any of claims 1 to 4, wherein at least one support roll and/or counter-contact surface is provided on the underside of the chassis, by means of which tilting forces can be introduced into the travel rails of the rack system when the load mandrel (22) is pivoted out laterally relative to the roll shuttle.

**6.** A suspended roll shuttle for transporting rolls along a suspension rail system as well as to various pick-up and delivery points by means of distribution stations, which are coupled to several suspension rails, also between rack systems or within one rack system, comprising:

a suspension frame (44) having wheels mounted thereon in order to move the suspended roll shuttle along at least one suspension rail (40), which is mounted above a storage plane of the rack system;
a load mandrel (48) fastened to the suspension frame (44) for transporting at least one roll to be stored along the direction of the suspension rail (40); **characterised in that**
the load mandrel (48) is equipped with a chain conveyor in order to position rolls to be stored along the load mandrel (48).

**7.** The suspended roll shuttle according to claim 6,

wherein a pivotable stop (50) is provided on the suspension frame (44) in order to secure rolls during transport in the rack system, and/or
comprising a lifting system in order to raise or lower the load mandrel (48) relative to the suspension rail (40).

**8.** A rack system for storing and transporting rolls, comprising:

at least one storage plane having at least one pair of travel rails, which are provided for the transport of rolls;
a plurality of storage boxes (36, 38), which are placed adjacently to the at least one pair of travel rails in the storage plane;
at least one roll shuttle (10) according to any of claims 1 to 5, which is movable along at least one pair of travel rails for the transport of rolls.

**9.** The rack system according to claim 8, comprising at least one
suspension rail (40), which is arranged transversely to the direction of travel of the at least one pair of travel rails above the storage plane in order to form a travel path for a suspended roll shuttle (42) according to any of claims 6 and 7 above the storage plane.

**10.** The rack system according to claim 8 or 9, wherein the suspension rail is guided in a housing.

**11.** The rack system according to any of claims 8 to 10, comprising an inspection platform (58) in order to allow access to the at least one roll shuttle (10) and/or the at least one suspended roll shuttle (42) for maintenance or servicing activities.

**12.** The rack system according to any of claims 8 to 11, wherein at least one storage box (38), which is adjacent to the at least one pair of travel rails, is movable in the direction of travel of the at least one pair of travel rails.

**13.** The rack system according to claim 12, wherein the at least one movable storage box (38) has a lifting means (52) for raising or lowering a storage surface of the storage box (38).

**14.** The rack system according to any of claims 8 to 13, having at least two storage planes, wherein at least one lift system (56) is provided on at least one outer side face of the rack system in order to relocate roll shuttles among different storage planes.

**15.** A method for operating a rack system according to any of claims 8 to 14, comprising the steps of:

determining a first position $x_s 1$ and a second position $x\_s\_2$ along the at least one pair of travel rails in order to set a movement of a roll shuttle (10) according to any of claims 1 to 5 in a first direction along the at least one pair of travel rails according to an instruction to store or retrieve at least one roll;

EP 4 172 074 B1

controlling the position y_s of the running slide transversely to the direction of travel of the roll shuttle and the pivot angle $\alpha$ of the load mandrel during the movement of the roll shuttle between the first position x s-1 and the second position x_s_2,

such that the condition arcsin[(y_l-y_s)/L] > $\alpha$(y_s) > arcsin[(y_r-y_s)/L] is met, when L is the length of the load mandrel (22), and

the values yl-ys and yr-ys are set on the basis of the position y_s of the running slide relative to the positions y_l and y_r of the running rails.

**Revendications**

1. Navette à rouleaux pour le transport de rouleaux dans un système de rayonnage contenant :

   un châssis (12) avec des roues montées sur celui-ci afin de déplacer la navette à rouleaux le long de rails de roulement qui sont posés dans un plan de stockage du système de rayonnage ;
   un chariot mobile (16) qui est monté au niveau du châssis (12) de sorte qu'il puisse être déplacé par rapport au sens de la marche de la navette à rouleaux le long d'un sens qui diverge du sens de la marche de la navette à rouleaux d'un angle prédéterminé supérieur à zéro ;
   un mandrin de charge (22) pour le transport d'au moins un rouleau à loger qui est fixé de manière pivotante au chariot mobile (16) dans un plan sensiblement parallèle au plan de stockage du système de rayonnage ; **caractérisé en ce que** le mandrin de charge (22) est équipé d'un transporteur à chaîne (24) afin de positionner des rouleaux à loger le long du mandrin de charge (22).

2. Navette à rouleaux selon la revendication 1, dans laquelle le chariot mobile (16) est déplaçable transversalement au sens de la marche de la navette à rouleaux.

3. Navette à rouleaux selon la revendication 1 ou la revendication 2, dans laquelle une butée est prévue au niveau du mandrin de charge (22) afin de fixer des rouleaux pendant un transport dans le système de rayonnage.

4. Navette à rouleaux selon l'une quelconque des revendications 1 à 3, contenant un système de levage afin de lever ou d'abaisser le mandrin de charge (22) par rapport au châssis (12).

5. Navette à rouleaux selon l'une quelconque des revendications 1 à 4, dans laquelle au moins un rouleau d'appui et/ou une surface d'appui antagoniste est prévu(e) au niveau du côté inférieur du châssis, au moyen duquel ou de laquelle en cas de mandrin de charge (22) pivoté latéralement par rapport à la navette à rouleaux, des forces de basculement peuvent être introduites dans les rails de roulement du système de rayonnage.

6. Navette à rouleaux suspendus pour le transport de rouleaux le long d'un système de rail suspendu, ainsi qu'à des points d'alimentation et de livraison différents au moyen de postes de distribution qui sont couplés à plusieurs rails suspendus, de plus entre des systèmes de rayonnage ou à l'intérieur d'un système de rayonnage, contenant :

   un châssis suspendu (44) avec des roues montées sur celui-ci afin de déplacer la navette à rouleaux suspendus le long d'au moins un rail suspendu (40) qui est monté au-dessus d'un plan de stockage du système de rayonnage ;
   un mandrin de charge (48) fixé au châssis suspendu (44) pour le transport d'au moins un rouleau à loger le long du sens du rail suspendu (40) ; **caractérisé en ce que**
   le mandrin de charge (48) est équipé d'un transporteur à chaîne afin de positionner des rouleaux à loger le long du mandrin de charge (48).

7. Navette à rouleaux suspendus selon la revendication 6,

   dans laquelle une butée (50) pivotante est prévue au niveau du châssis suspendu (44) afin de fixer des rouleaux pendant un transport dans le système de rayonnage et/ou
   contenant un système de levage afin de lever ou d'abaisser le mandrin de charge (48) par rapport au rail suspendu (40).

8. Système de rayonnage pour le stockage et le transport de rouleaux contenant :

au moins un plan de stockage avec au moins une paire de rails de roulement qui sont prévus pour le transport de rouleaux ;

une pluralité de boîtes de stockage (36, 38) qui sont placées de manière contiguë à l'au moins une paire de rails de roulement dans le plan de stockage ;

au moins une navette à rouleaux (10) selon l'une quelconque des revendications 1 à 5 qui est déplaçable le long de l'au moins une paire de rails de roulement pour le transport de rouleaux.

9. Système de rayonnage selon la revendication 8, contenant au moins un

rail suspendu (40) qui est agencé transversalement au sens de la marche de l'au moins une paire de rails de roulement au-dessus du plan de stockage afin de former une voie de roulement pour une navette à rouleaux suspendus (42) selon l'une quelconque des revendications 6 et 7 au-dessus du plan de stockage.

10. Système de rayonnage selon la revendication 8 ou la revendication 9, dans lequel le rail suspendu est guidé dans une enceinte.

11. Système de rayonnage selon l'une quelconque des revendications 8 à 10, contenant une plateforme de marche (58) afin de permettre pour des activités de maintenance ou de service un accès à l'au moins une navette à rouleaux (10) et/ou à l'au moins une navette à rouleaux suspendus (42).

12. Système de rayonnage selon l'une quelconque des revendications 8 à 11, dans lequel au moins une boîte de stockage (38) qui est contiguë à l'au moins une paire de rails de roulement, peut être déplacée dans le sens de la marche de l'au moins une paire de rails de roulement.

13. Système de rayonnage selon la revendication 12, dans lequel l'au moins une boîte de stockage (38) déplaçable présente un dispositif de levage (52) afin de lever ou d'abaisser une surface d'appui de la boîte de stockage (38).

14. Système de rayonnage selon l'une quelconque des revendications 8 à 13, qui présente au moins deux plans de stockage, dans lequel au moins un système élévateur (56) est prévu au niveau d'au moins une surface latérale extérieure du système de rayonnage afin de mettre en place des navettes à rouleaux entre différents plans de stockage.

15. Procédé de fonctionnement d'un système de rayonnage selon l'une quelconque des revendications 8 à 14, contenant les étapes suivantes :

la détermination d'une première position x s 1 et d'une deuxième position x_s_2 le long de l'au moins une paire de rails de roulement afin de fixer un déplacement d'une navette à rouleaux (10) selon l'une quelconque des revendications 1 à 5 dans un premier sens le long de l'au moins une paire de rails de roulement selon un ordre de stockage ou de déstockage d'au moins un rouleau ;

la commande de la position y_s du chariot de roulement transversalement au sens de la marche de la navette à rouleaux et de l'angle de pivotement $\alpha$ du mandrin de charge pendant le déplacement de la navette à rouleaux entre la première position x s-1 et la deuxième position x_s_2 de

sorte que la condition arcsin[(y_l-y_s)/L] > $\alpha$(y_s) > arcsin[(y_r-y_s)/L] soit remplie lorsque

L est la longueur du mandrin de charge (22) et

les valeurs yl-ys et yr-ys sont fixées à l'aide de la position y_s du chariot de roulement par rapport aux positions y_l et y_r des rails de roulement.

FIG. 1

FIG. 2

FIG. 3

FIG. 4

10

FIG. 5

FIG. 6

FIG. 7

FIG. 8

FIG. 9

60

Einhausung

38

Transportshuttle

Hängefördersystem

42

Rolle

58

FIG. 10

64

Auf- und Abgabestation
Postforming 1
Vertikallift mit Aufnahmemittel

68

Zwischenpuffer

62

Hängefördersystem
Mit Einhausung

70

Auf- und Abgabestation
Postforming 2
Vertikallift mit Aufnahmemittel

Vorzonenbereich

Aufgabestation
(Laminathalle)

66

FIG. 11

Transportshuttle

Übergabestationen

Abgabestation

Wartungs-
Servicepodest

Vertikallift
Aufnahmemittel

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006160477 A
- JP H0539107 A
- JP S48100870 A
- JP 2007062973 A
- JP S62244803 A
- US 6280135 B1